(19) Europäisches Patentamt

European Patent Office

Office européen des brevets

(11) **EP 0 792 276 B1**

(12) **EUROPÄISCHE PATENTSCHRIFT**

(45) Veröffentlichungstag und Bekanntmachung des Hinweises auf die Patenterteilung:
**16.02.2000 Patentblatt 2000/07**

(21) Anmeldenummer: **95939270.5**

(22) Anmeldetag: **13.11.1995**

(51) Int Cl.⁷: **C07F 9/10**, A23J 7/00

(86) Internationale Anmeldenummer:
**PCT/EP95/04457**

(87) Internationale Veröffentlichungsnummer:
**WO 96/15133 (23.05.1996 Gazette 1996/23)**

(54) **VERFAHREN ZUR ERZEUGUNG VON HOCHPROZENTIGEN, PULVERFÖRMIGEN PHOSPHATIDYLCHOLINEN**

PROCESS FOR PREPARING HIGH-PERCENTAGE POWDERY PHOSPHATIDYLCHOLINES

PROCEDE DE PREPARATION DE PHOSPHATIDYLCHOLINES PULVERULENTES DE HAUTE PURETE

(84) Benannte Vertragsstaaten:
**DE FR GB**

(30) Priorität: **15.11.1994 DE 4440831**

(43) Veröffentlichungstag der Anmeldung:
**03.09.1997 Patentblatt 1997/36**

(73) Patentinhaber: **Peter, Siegfried, Prof. Dr.**
**91080 Uttenreuth-Weiher (DE)**

(72) Erfinder:
• **PETER, Siegfried**
**D-91080 Uttenreuth-Weiher (DE)**
• **WEIDNER, Eckhard**
**D-91056 Erlangen (DE)**

• **ZHANG, Zhengfeng**
**D-91054 Erlangen (DE)**

(74) Vertreter: **Weinhold, Peter, Dr. et al**
**Winter, Brandl, Fürniss, Hübner, Röss, Kaiser, Polte, Kindermann**
**Partnerschaft**
**Patent- und Rechtsanwaltskanzlei**
**Alois-Steinecker-Strasse 22**
**85354 Freising (DE)**

(56) Entgegenhaltungen:
EP-A- 0 156 374          EP-A- 0 259 836
EP-A- 0 352 667          EP-A- 0 615 694
WO-A-93/19617            DE-A- 2 141 356
GB-A- 2 072 189

**Beschreibung**

Für die Erzeugung besonders stabiler Liposomen in Wasser werden Lecithine mit erhöhtem Gehalt an Phosphatidylcholin (PC) benötigt. So werden Lecithine mit einem Gehalt von 76 Gew.-% bis 90 Gew.-% PC in der Zubereitung von Pharmazeutika und Kosmetika eingesetzt. In Wasser quellen Lecithine zunächst wie lyophile Kolloide auf. Später bilden sie durchsichtige, kolloidale Lösungen, in denen sich flüssige Kristalle ausbilden. Diese stellen lamellare smektische Phasen mit je nach Wassergehalt unterschiedlichen Texturen dar, wobei die Lamellen aus Lipiddoppelschichten gebildet werden. Bei höherem Wassergehalt entstehen Liposomen, die kugelförmige Gebilde aus einer oder mehreren konzentrischen Lipiddoppelschichten mit wäßrigem Innenraum darstellen. Derartige Gebilde lassen sich durch mechanische Feinstverteilung von Phospholipiden in wäßrigen Medien herstellen. Sie werden in der Pharmazie als Träger für Arzneimittel verwendet. Ebenso spielen sie in der Zellbiologie und in der Kosmetik sowie der Lebensmittelindustrie eine Rolle.

Besonders gut geeignet für die Erzeugung von Liposomen sind Lecithine, die reich an Phosphatidylcholin (PC) sind. So werden Präparate mit 80 bis 90 Gew.-% PC-Gehalt hergestellt. Die gute Haftung der Liposomen auf der Hornhaut (Stratum corneum) macht die Liposomen für die Verwendung in der Dermatologie besonders interessant.

Phospholipide in der Form von Nanoemulsionen oder Liposomen hydratisieren das Stratum Corneum. Diese Hydratation ist vorübergehend, d.h. etwa von 2 - 3 Stunden Dauer. Der mit der Hydratation verbundene Effekt der Erhöhung der Penetration durch die Haut ist deshalb ebenfalls vorübergehend. Dies ist günstig für die Anwendung eines Systems zur Erhöhung der Penetration durch die Haut, da das Eindringen toxischer Stoffe, z.B. Umweltgifte, verhindert werden muß.

Wegen des fluiden Zustandes der aus Sojabohnen stammenden, an PC reichen Liposomen wird die starre Struktur der Hornschicht der Haut beweglicher. Das Ausmaß der Erhöhung der Beweglichkeit ist von der Dosis abhängig. Je höher die Dosis ist, desto stärker ist die Veränderung der Lipidschranke. Infolge dieser Wirkung kann das Eindringen eines aktiven Wirkstoffs leicht gesteuert werden. Diese Erhöhung der Beweglichkeit ist jedoch wegen der Rückbildung der Oberhautlipidschranke nur vorübergehend; sie dauert möglicherweise einige Tage. Da die Lipidschranke der Hornschicht mit einer verflüssigenden Komponente verdünnt ist, bilden sich in diesem Zustand erhöhter Beweglichkeit keine Verstopfungen aus. Die chemische Zusammensetzung und Mikrostruktur wechselt für einen begrenzten Zeitraum von dem einer starren Hornschicht zu dem einer körnigen Schicht (Stratum granulosum). Die hieraus hervorgehenden unterbrochenen lamellaren Schichten erleichtern das Eindringen von lokal angewandten Medikamenten.

Das Sojalecithin, wie die vegetabilischen Lecithine im allgemeinen, enthält Phosphatidylcholin in Konzentrationen von 15 bis 25 % bezogen auf den Phospholipidgehalt. Die Anreicherung des Phosphatidylcholins geschieht durch Auflösen des entölten Lecithins in Ethanol und anschließende Trennung auf dem Wege der präparativen Adsorptions-Chromatographie. Dabei betragen die Ausgangskonzentrationen der im Ethanol gelösten Phospholipide etwa 5 bis 10 %. Als feste, ruhende Phase wird meist Kieselgur verwendet. Eine bestimmte Menge der Phospholipidlösung wird am Kopf einer mit der festen Phase gefüllten Kolonne injiziert. Das flüssige Elutionsmittel Ethanol bewegt sich über die feste Phase hinweg. Infolge von Wechselwirkungen der gelösten Komponenten mit der festen Phase und dem Elutionsmittel wandern die verschiedenen Komponenten mit unterschiedlicher Geschwindigkeit durch die Adsorptionssäule und verlassen diese Säule in zeitlich aufeinanderfolgenden Abständen. Die Fraktion, welche das Phosphatidylcholin enthält, wird separat ausgeschleust und weiterbehandelt.

Zunächst wird die Hauptmenge des Ethanols durch Destillation bei Atmosphärendruck soweit abgetrennt, bis eine Lösung mit etwa 20 Gew.-% Ethanol entstanden ist. Danach wird das verbleibende Ethanol im Vakuum und schließlich durch Kurzwegdestillation oder mit Hilfe eines Walzentrockners schonend vom Phosphatidylcholin abgetrennt. Auf diese Weise wird ein Produkt erhalten, das neben Phospholipiden und 3 bis 5 Gew.-% Lipiden noch etwa 0,5 Gew.-% Ethanol enthält. Der Anteil an Phosphatidylcholinen im so erhaltenen Phosphatidgemisch beträgt typischerweise 76 +/- 3 %, der Anteil an Lysophosphatidylcholinen beträgt typischerweise 3 +/- 3 %. Mit Hilfe der präparativen Chromatographie werden im allgemeinen Phospholipide mit einem Gehalt an Phosphatidylcholinen von wenigstens etwa 60 Gew.-% bis etwa 90 Gew.-% oder darüber erhalten.

Aus der WO93/19617 ist ein Verfahren zur Abtrennung bzw. Anreicherung von PC aus einer Phosphatidmischung bekannt, welches dadurch gekennzeichnet ist, dass eine gute Selektivität für PC erreicht wird, wenn einem System aus einem aliphatischen Alkohol und einer Phosphatidmischung ein aliphatischer kurzkettiger Kohkenwasserstoff zugegeben und danach durch Zugabe eines Gases dafür gesorgt wird, dass das System zweiphasig wird.

Die an Phosphatidylcholinen reichen Produkte haben eine wachsartige, harte Konsistenz. Sie kommen deshalb in Form von Blöcken in den Handel. Die Weiterverarbeitung der in Blockform angelieferten Phosphatidylcholine ist jedoch zeitaufwendig. Deshalb besteht ein großes Interesse an der Erzeugung eines pulverförmigen Produktes.

Es hat sich nun überraschenderweise herausgestellt, daß die Herstellung eines pulverförmigen Produktes bei gleichzeitig vollständiger Entfernung des Ethanols in vorteilhafter Weise unter Verwendung von Niederdruckgasen wie z.B. Propan, Butan, Dimethylether und deren Gemischen als Extraktionsmittel oder auch unter Verwendung von Gemischen dieser Niederdruckgase mit Kohlendioxid in einem einzigen Arbeitsgang möglich ist.

Unter Niederdruckgasen versteht man Gase mit e m Siedepunkt von höchstens 0 °C und einer über der Raumtemperatur liegenden kritischen Temperatur. Die zur Durchführung aes erfindungsgemäßen Verfahrens geeigneten Niederdruckgase weisen bei Raumtemperatur (20 °C) reduzierte Temperaturen von mehr als ungefähr 0,7 auf, d.h., sie weisen kritische Temperaturen von bis zu ungefähr 146 °C auf. (Zur Definition des Begriffs der reduzierten Temperatur siehe: Römpp Chemie Lexikon, Georg Thieme Verlag Stuttgart, 9. Aufl., 1990, Bd. 3, S. 2381 f.)

Zweckmäßigerweise geht man im erfindungsgemäßen Verfahren von einer Lösung des Phosphatidgemisches in Ethanol aus, wie sie nach der atmosphärischen Destillation der ausgeschleusten Phosphatidylcholin-Fraktion vorliegt. Eine solche Lösung hat etwa die folgende Zusammensetzung: Phosphatide 77 Gew.-%, Ethanol 20 Gew.-%, Lipide 3 Gew.-%. Statt der Lösung in Ethanol können jedoch auch Lösungen in anderen niedrigsiedenden Alkoholen, wie z.B. Methanol oder Isopropanol, verwendet werden.

Die Entfernung von Ethanol erfolgt beispielsweise durch Extraktion mit Propan in einer Gegenstromkolonne. Ebenso sind Gemische aus Dimethylether und Kohlendioxid und Gemische aus Dimethylether und Propan geeignet. Schwerflüchtige Bestandteile (z.B. bestimmte Phosphatide und restliche Lipide) und Ethanol werden als Extraktstrom an Kopf der Kolonne abgeführt. Die Phosphatide werden als Raffinat am Boden der Kolonne abgezogen. Das Raffinat hat etwa die folgende Zusammensetzung:

Phosphatide < 99 %

Ethanol < 0,5 %

Lipide < 0,5 %

Die Verwendung von Dimethylether/Propan-Gemischen als Extraktionsmittel hat den Vorteil, daß sich die Prozeßführung bei der Extraktion einfacher gestaltet. Bei einer Verwendung von Dimethylether/Propan-Gemischen als Extraktionsmittel ist das Entstehen von fester Substanz und damit die Verstopfung der Apparatur infolge von Schwankungen in den Prozeßparametern praktisch ausgeschlossen, so daß die Temperaturen und Drücke im Gegensatz zur Extraktion mit reinem Propan nicht in relativ engen Grenzen eingehalten werden müssen. Außerdem sind die Beladungen bei gleichen Drücken und Temperaturen höher. Entsprechend kann das Lösungsmittelverhältnis vermindert werden, was zu Kostenvorteilen führt. Etwa das gleiche gilt für die Verwendung von Dimethylether/Kohlendioxid-Gemischen. Der Zusatz von Propan oder Kohlendioxid, d.h. eines relativ schlechten Lösers für Phosphatide, zum Dimethylether ist zur Erzeugung der Zweiphasigkeit erforderlich. Dimethylether zeichnet sich darüberhinaus dadurch aus, daß er sterilisierend wirkt (US Patent 70-65695 700820; Erfinder: Levine, Irving und Englander) und keine Peroxide wie die sonstigen Ether bildet.

Die Verwendung von Dimethylether als Schleppmittel bei der Extraktion von Fettsäuren aus wäßriger Lösung mit überkritischem Kohlendioxid wurde von E.J. Shimshick vorgeschlagen [CHEMTECH (1983), 13 (6), 374-51]. Dabei werden dem überkritischen Kohlendioxid Dimethylethermengen in Höhe von etwa 12 +/- 3 Gew.-% zugesetzt. Nach dem Verfahren der vorliegenden Erfindung fungiert Dimethylether jedoch als eigentliches Extraktionsmittel, während die Zugabe an Kohlendioxid auf diejenige Menge beschränkt ist, welche gerade zur Erzeugung von Zweiphasigkeit erforderlich ist. Im japanischen Patent 73-88184 wird die Verwendung von Dimethylether als Extraktionsmittel zur Extraktion von Aromastoffen aus Materialien wie Gewürzen, Tee, Kaffee, Lebensmitteln und Blüten vorgeschlagen.

Das unter dem jeweiligen Betriebsdruck der Extraktionskolonne stehende, flüssige Raffinat wird aus dem Sumpf der Extraktionskolonne abgezogen und unmittelbar einer Entspannungsdüse zugeführt. Diese Düse befindet sich am Kopf eines zylindrischen Auffangbehälters, der gleichzeitig für eine ausreichende Fallstrecke sorgt. In der Düse wird das Raffinat unter Entspannung auf Atmosphärendruck oder auch auf einen bis auf etwa 0,01 bar verminderten Druck versprüht. Das im Raffinat gelöste Extraktionsmittel entgast und kühlt dabei das Produkt ab. Es entsteht ein feines Pulver. Das Produkt kann in pulverförmigem Zustand bei mäßig verminderten Temperaturen (etwa -10 °C) transportiert und in den Handel gebracht werden kann.

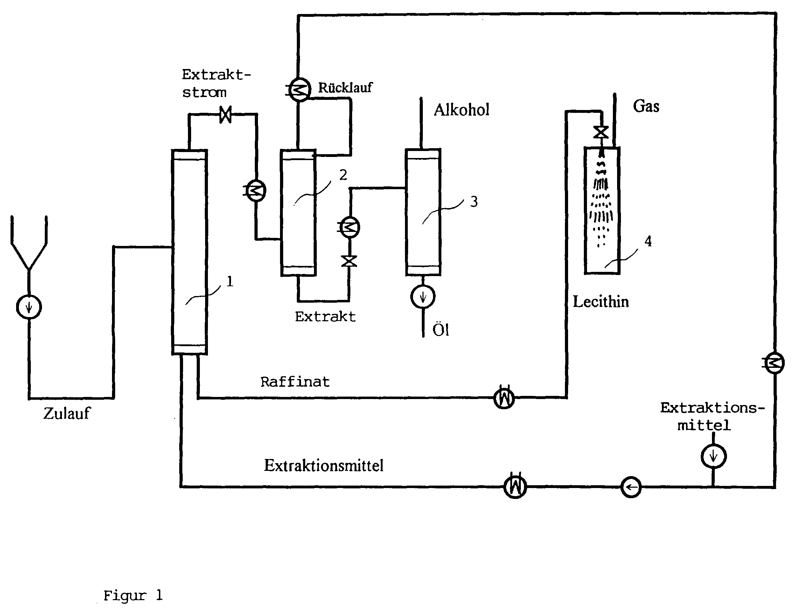

Die Erfindung wird anhand der Figur 1 näher erläutert. Sie zeigt eine für die Durchführung des Verfahrens geeignete Extraktionsvorrichtung in schematischer Darstellung. Wegen der wirtschaftlichen Vorteile wird das erfindungsgemäße Verfahren bevorzugt kontinuierlich im Gegenstrom durchgeführt. Die Apparatur besteht im wesentlichen aus einer Extraktionskolonne (1), einer Regenerierkolonne (2) zur Regenerierung des Extraktionsmittels, einer Destillationskolonne (3) zur Abtrennung des Alkohols vom Extrakt und einer Sprühvorrichtung (4) mit einer zylindrischen Sprühstrecke, in der das versprühte Material von den Resten an Extraktionsmittel und Alkohol befreit und das pulverförmige Produkt am Boden gesammelt wird.

Eine etwa 80 %ige Lösung der Phosphatidylcholine in einem niedrig siedenden Alkohol, beispielsweise Ethanol, wird in die Extraktionskolonne (1) in der gewünschten Höhe gepumpt, vorzugsweise etwa in die Mitte der Kolonne. Das Extraktionsmittel wird zweckmäßig an Fuß der Kolonne zugeführt und durchströmt die Extraktionskolonne (1) von unten nach oben. Druck und Temperatur werden so eingestellt, daß die Mischung aus dem Extraktionsmittel und der alkoholischen Lösung des Phosphatidgemisches bzw. den Phosphatidylcholinen in zwei flüssigen Phasen vorliegt. Der Alkohol und die schwerflüchtigen Bestandteile des Ausgangsgemischs lösen sich im Extraktionsmittel und werden als Extraktstrom am Kopf der Extraktionskolonne (1) ausgetragen und der Regenerierkolonne (2) zugeführt. Durch Erhöhung der Temperatur und/oder Verminderung des Drucks werden in der Regenerierkolonne Bedingungen eingestellt, unter denen das Extraktionsmittel als Dampf vorliegt, d.h. der Druck in der Regenerierkolonne (2) ist niedriger als der Dampfdruck des Extraktionsmittels bei der entsprechenden Temperatur. Infolgedessen fallen die gelösten schwerflüchtigen Bestandteile quantitativ und der Alkohol größtenteils aus.

Das Extraktionsmittel verläßt die Regenerierkolonne (2) in dampfförmigem Zustand am Kopf. In Wärmetauschern werden zunächst der mitgeführte Alkohol und danach durch weitere Abkühlung das Extraktionsmittel kondensiert. Das kondensierte Extraktionsmittel wird in die Extraktionskolonne (1) zurückgepumpt. Wenn gewünscht, kann ein Teil des in der Regenerierkolonne (2) angefallenen Extrakts als Rücklauf auf den Kopf der Extraktionskolonne (1) zurückgeführt werden, um so gegebenenfalls auch geringfügige Verluste an Phosphatiden, die mit dem Extraktstrom abgeführt werden könnten, zu vermeiden. Der übrige Teil des in der Regenerierkolonne (2) abgetrennten Extrakts wird als Sumpfprodukt aus der Regenerierkolonne (2) abgezogen, auf Atmosphärendruck entspannt und der Destillationskolonne (3) in der gewünschten Höhe zugepumpt. In der Destillationskolonne (3) werden anschließend die schwerflüchtigen Bestandteile und der Alkohol voneinander getrennt. Der Alkohol wird in den diesem Verfahren vorgeschalteten Prozeß der präparativen Chromatographie zurückgegeben. Das im Verlauf der Entnahme des Extrakts als flüssiges Sumpfprodukt der Regenerierkolonne (2) bei der Entspannung freigesetzte gasförmige Extraktionsmittel wird je nach Größe der Produktion rekomprimiert oder verbrannt.

Infolge seiner höheren Dichte fließt das flüssige Lecithin in der Extraktionskolonne (1) nach unten und wird dabei von Alkohol befreit. Die so von Alkohol befreiten, hochprozentigen Phosphatidylcholine werden am Sumpf der Extraktionskolonne (1) als Raffinat abgezogen und der Sprühvorrichtung (4) zugeführt. Das Raffinat enthält noch gelösten Alkohol und gelöstes Extraktionsmittel. In der Sprühdüse wird das flüssige Raffinat unter Entspannung auf Atmosphärendruck oder auch verminderten Druck versprüht. Zwischen Extraktionskolonne (1) und Sprühvorrichtung (4) kann das Raffinat mit Hilfe eines Wärmetauschers auf die für den Sprühvorgang günstigste Temperatur eingestellt werden. Extraktionsmittel und Alkohol entweichen aus den bei der Versprühung gebildeten Tropfen, und das sich bildende pulverförmige Produkt fällt innerhalb der Sprühstrecke nach unten und sammelt sich am Boden des Sprühkanals. Die entweichenden Komponenten Alkohol und Extraktionsmittel werden aus dem Sprühkanal abgezogen und können je nach Größe der Produktion kondensiert und der Regenerierkolonne (2) zugepumpt oder verbrannt werden. Die hochprozentigen Phosphatidylcholine fallen als geruchloses, gelblichweißes, lösungsmittelfreies Pulver an. Zweckmäßigerweise werden zwei Sprühkanäle vorgesehenen, so daß ein kontinuierlicher Betrieb möglich ist. Während das erhaltene Pulver aus dem einen Sprühkanal entnommen wird, kann in dem anderen Kanal produziert werden.

Um während des Extraktionsvorgangs Zweiphasigkeit zu gewährleisten, wird die Extraktion zweckmäßig bei Temperaturen im Bereich von 0 bis 100 °C, vorzugsweise von 35 bis 75 °C betrieben. Der Druck beträgt zweckmäßig 5 bis 100 bar, vorzugsweise 30 bis 60 bar. Vorzugsweise wird im unterkritischen Bereich gearbeitet.

Das erfindungsgemäße Verfahren wird durch die folgenden Beispiele näher erläutert.

Beispiel 1

Eine Lösung von 80 Gew.-% Phosphatiden in Ethanol wird in einer Vorrichtung nach Figur 1 aufbereitet. Die gelösten Phosphatide bestehen zu 76 +/- 3 Gew.-% aus Phosphatidylcholinen, zu 3 +/- 3 Gew.-% aus Lysophosphatidylcholinen, zu etwa 8 Gew.-% aus Phosphatidsäure, zu etwa 4 Gew.-% aus Phosphatidylethanolaminen und zu etwa 9 Gew.-% aus anderen Lipiden. Die flüssige Lösung wird etwa in der Mitte der Extraktionskolonne zugepumpt. Die Kolonne ist mit einer Drahtgewebepackung des Typs Sulzer CY versehen. Die Kolonne besteht aus verschiedenen Abschnitten von 1 Meter Länge, von denen jeder einen Heizmantel zur Regelung der Temperatur besitzt. Die Gesamtlänge der Kolonne beträgt 4 Meter. Der Verstärkerteil besitzt 3, der Abtriebsteil 4 theoretische Trennstufen. Als Extraktionsmittel dient Propan bei einem Druck von 45 bar. Die Kolonnentemperatur beträgt 60 °C. Das Extraktionsmittel durchströmt die Kolonne von unten nach oben. Das Verhältnis von Feed, d.h. der alkoholischen Lösung des Phosphatidgemischs, zu Propan beträgt 1 : 5. Die Beladung des Propans beträgt etwa 4 Gew.-%.

Der die Extraktionskolonne an Kopf verlassende Extraktstrom wird der Regenerierkolonne etwa in der Mitte zugeführt. Die Regenerierkolonne arbeitet bei 80 °C und 20 bar. Das Propan ist bei diesen Bedingungen gasförmig, und die im Propan gelösten schwerflüchtigen Bestandteile fallen quantitativ und das Ethanol größtenteils (zu etwa 60 bis 75 %) aus. Der Extrakt wird am Sumpf der Regenerierkolonne abgezogen und auf Umgebungsdruck entspannt. Dabei werden das Propan, welches zu 50 Gew.-% im Extrakt gelöst ist, und ein Teil des gelösten Ethanols entlöst. Nach Abzug des Propans besteht der Extrakt zu 72 Gew.-% aus Ethanol sowie zu 28 Gew.-% aus Phosphatiden und restlichen Lipiden.

Das von Ethanol befreite Raffinat wird an Sumpf der Extraktionskolonne abgezogen und der Sprühvorrichtung zugepumpt. Es gelangt bei einer Temperatur von 55 °C in die Sprühdüse und wird in den Sprühkanal unter Entspannung auf Umgebungsdruck versprüht. Das Raffinat enthält beim Verlassen der Extraktionskolonne etwa 1 Gew.-% Ethanol und 20 Gew.-% Propan. Ethanol und Propan entweichen bei der Entspannung, und ein pulverförmiges gut fließfähiges Produkt sammelt sich am Boden des Sprühkanals an. In Anbetracht des geringen Durchsatzes an Feed von 2 kg/h wird das bei der Versprühung freiwerdende Gas verbrannt. Nach Beendigung des Sprühvorgangs wird der Sprühkanal auf einen Druck von 0,01 bar evakuiert, um letzte Spuren an Propan zu entfernen und das Produkt für eine langfristige Lagerung zu stabilisieren. Das pulverförmige Endprodukt hat folgende Zusammensetzung: Phospholipide > 99 Gew.-%, Ethanol << 0,5 Gew.-%; Lipide < 0,5 Gew.-%.

Beispiel 2

Eine Lösung von 80 Gew.-% Phosphatiden in Ethanol wird in einer Vorrichtung entsprechend Figur 1 aufbereitet. Die gelösten Phosphatide bestehen zu 76 +/- 3 Gew.-% aus Phosphatidylcholinen, zu 3 +/- 3 Gew.-% aus Lysophosphatidylcholinen, zu etwa 8 Gew.-% aus Phosphatidsäure, zu etwa 4 Gew.-% aus Phosphatidylethanolaminen und zu etwa 9 Gew.-% aus anderen Lipiden. Die flüssige Lösung wird etwa in der Mitte der Extraktionskolonne zugepumpt. Die Kolonne ist mit einer Drahtgewebepackung des Typs Sulzer CY versehen. Die Kolonne besteht aus verschiedenen Abschnitten von 1 Meter Länge, von denen jeder einen Heizmantel zur Regelung der Temperatur besitzt. Jeder Heizmantel ist an einen separaten Thermostaten angeschlossen. Die Gesamtlänge der Kolonne beträgt 4 Meter. Der Verstärkerteil besitzt 3, der Abtriebteil 4 theoretische Trennstufen. Als Extraktionsmittel dient ein Gemisch aus etwa 95 Gew.-% Propan und 5 Gew.-% Dimethylether. Die Kolonnentemperatur beträgt 63 °C; der Druck 70 bar. Das Extraktionsmittel durchströmt die Kolonne von unten nach oben. Das Verhältnis von Feed zu Extraktionsmittel beträgt 2 : 5. Die Beladung des Extraktionsmittels beträgt etwa 6,7 Gew.-%.

Der die Extraktionskolonne am Kopf verlassende Extraktstrom wird der Regenerierkolonne etwa in der Mitte zugeführt. Die Regenerierkolonne arbeitet bei 90 °C und 20 bar. Das Gemisch aus Propan und Dimethylether ist bei diesen Bedingungen gasförmig. Die in diesem Extraktionsmittel gelösten schwerflüchtigen Bestandteile fallen quantitativ und das Ethanol größtenteils (zu etwa 55 bis 65 %) aus. Der Extrakt wird am Sumpf der Regenerierkolonne abgezogen und auf Umgebungsdruck entspannt. Dabei werden das Extraktionsmittel, welches zu etwa 55 Gew.-% im Extrakt gelöst ist, und ein Teil des gelösten Ethanols entlöst. Nach Abzug des Extraktionsmittels besteht der Extrakt zu 72 Gew.-% aus Ethanol sowie zu 28 Gew.-% aus Phosphatiden und restlichen Lipiden.

Das von Ethanol befreite Raffinat wird am Sumpf der Extraktionskolonne abgezogen und der Sprühvorrichtung zugepumpt. Es gelangt bei einer Temperatur von 60 °C in die Sprühdüse und wird in den Sprühkanal unter Entspannung auf Umgebungsdruck versprüht. Die Ethanolkonzentration des Raffinats beim Verlassen der Extraktionskolonne beträgt weniger als 1 Gew.-%. Das Extraktionsmittel ist zu etwa 40 Gew.-% im Raffinat gelöst. Ethanol und Extraktionsmittel entweichen bei der Versprühung unter Entspannung, und ein pulverförmiges, gut fließfähiges Produkt sammelt sich am Boden des Sprühkanals an. In Anbetracht des geringen Durchsatzes an Feed von 2 kg/h wird das bei der Versprühung freiwerdende Gas verbrannt; ebenso wurde auf eine Destillation des Sumpfproduktes aus der Regenerierkolonne verzichtet. Nach Beendigung des Sprühvorgangs wird der Sprühkanal auf einen Druck von 0,01 bar evakuiert, um letzte Spuren an Extraktionsmittel zu entfernen und das Produkt für die langfristige Lagerung zu stabilisieren. Das pulverförmige Endprodukt hatte folgende Zusammensetzung: Phospholipide > 99 Gew.-%, Ethanol << 0,5 Gew.-%, Lipide < 0,5 Gew.-%.

Beispiel 3

Eine Lösung von 80 Gew.-% Phosphatiden in Ethanol wird in einer Vorrichtung nach Figur 1 aufbereitet. Die gelösten Phosphatide bestehen zu 76 +/- 3 Gew.-% aus Phosphatidylcholinen, zu 3 +/- 3 Gew.-% aus Lysophosphatidylcholinen, zu etwa 8 Gew.-% aus Phosphatidsäure, zu etwa 4 Gew.-% aus Phosphatidylethanolaminen und zu etwa 9 Gew.-% aus anderen Lipiden. Die flüssige Lösung wird etwa in der Mitte der Extraktionskolonne zugepumpt. Die Kolonne ist mit einer Drahtgewebepackung des Typs Sulzer CY versehen. Die Kolonne besteht aus verschiedenen Abschnitten von 1 Meter Länge, von denen jeder einen Heizmantel zur Regelung der Temperatur besitzt. Jeder Heizmantel ist an einen separaten Thermostaten angeschlossen. Die Kolonne enthält insgesamt 4 solcher Kolonnenabschnitte. Der Verstärkerteil besitzt 3, der Abtriebteil 4 theoretische Trennstufen. Als Extraktionsmittel dient ein Gemisch aus 20 Gew.-% Kohlendioxid und 80 Gew.-% Dimethylether bei einem Druck von 60 bar. Die Kolonnentemperatur beträgt 45 °C. Das Extraktionsmittel durchströmt die Kolonne von unten nach oben. Bei einem Verhältnis von Feed zu Extraktionsmittel von 1 : 4 beträgt die Beladung des Extraktionsmittels etwa 6 Gew.-%.

Der die Extraktionskolonne am Kopf verlassende Extraktstrom wird der Regenerierkolonne etwa in der Mitte zugeführt. Die Regenerierkolonne arbeitet bei 90 °C und 20 bar. Das Extraktionsmittel ist bei diesen Bedingungen gasförmig, und die im Extraktionsmittel gelösten schwerflüchtigen Bestandteile fallen qantitativ und das Ethanol größtenteils (zu etwa 70 %) aus. Der Extrakt wird am Sumpf der Regenerierkolonne abgezogen und auf Umgebungsdruck entspannt. Dabei entweichen das Extraktionsmittel, das zu etwa 50 Gew.-% im Extrakt gelöst ist, und ein Teil des Ethanols. Nach Abzug des Extraktionsmittels besteht der Extrakt etwa zu 70 Gew.-% aus Ethanol sowie zu 30 Gew.-% aus Phosphatiden und restlichen Lipiden.

Das von Ethanol befreite Raffinat wird am Sumpf der Extraktionskolonne abgezogen und der Sprühvorrichtung zugepumpt. Es gelangt bei einer Temperatur von 60 °C in die Sprühdüse und wird in den Sprühkanal unter Entspannung auf Umgebungsdruck versprüht. Das Raffinat enthält beim Verlassen der Extraktionskolonne etwa 1 Gew.-% Ethanol und etwa 45 Gew.-% Extraktionsmittel. Ethanol und Extraktionsmittel entweichen bei der Entspannung, und ein pulverförmiges, gut fließfähiges Produkt sammelt sich am Boden des Sprühkanals an. In Anbetracht des geringen Durchsatzes an Feed von 2 kg/h wird das bei der Versprühung freiwerdende Gas verbrannt; ebenso wurde auf eine Destillation des Sumpfproduktes aus der Regenerierkolonne verzichtet. Nach Beendigung des Sprühvorgangs wird der Sprühkanal auf einen Druck von 0,01 bar evakuiert, um die letzten Spuren an Extraktionsmittel zu entfernen und das Produkt für eine langfristige Lagerung zu stabilisieren. Das pulverförmige Endprodukt hatte folgende Zusammensetzung: Phosphatide > 99 Gew.-%, Ethanol << 0,5 Gew.-%, Lipide << 0,5 Gew.-%

**Patentansprüche**

1. Verfahren zur Erzeugung von hochprozentigen, pulverförmigen Phosphatidylcholinen aus Phosphatidgemischen mit erhöhtem Gehalt an Phosphatidylcholin, dadurch gekennzeichnet, daß man eine Lösung eines Phosphatidgemisches mit erhöhtem Gehalt an Phosphatidylcholinen in einem niedrigsiedenden Alkohol unter Verwendung eines Niederdruckgases, welches bei Raumtemperatur eine reduzierte Temperatur von mehr als ungefähr 0,7 aufweist, als Extraktionsmittel bei Drücken im Bereich von etwa 10 bis etwa 100 bar unter Bedingungen extrahiert, bei denen die Mischung aus dem Extraktionsmittel und der alkoholischen Lösung des Phosphatidgemisches bzw. den Phosphatidylcholinen in zwei flüssigen Phasen vorliegt, und das so erhaltene gereinigte Phosphatidgemisch in einer Sprühvorrichtung unter Entspannung versprüht.

2. Verfahren nach Anspruch 1, dadurch gekennzeichnet, daß das Phosphatidgemisch mit erhöhtem Gehalt an Phosphatidylcholin mehr als etwa 60 Gew.-

%, und vorzugsweise mehr als etwa 90 Gew.-%, von diesem enthält.

3. Verfahren nach mindestens einem der Ansprüche 1 bis 2, dadurch gekennzeichnet, daß die Extraktion im Gegenstrom erfolgt.

4. Verfahren nach mindestens einem der Ansprüche 1 bis 3, dadurch gekennzeichnet, daß als Extraktionsmittel Propan und/oder Butan verwendet wird.

5. Verfahren nach mindestens einem der Ansprüche 1 bis 3, dadurch gekennzeichnet, daß als Extraktionsmittel Dimethylether im Gemisch mit Propan verwendet wird.

6. Verfahren nach mindestens einem der Ansprüche 1 bis 3, dadurch gekennzeichnet, daß als Extraktionsmittel Dimethylether im Gemisch mit Kohlendioxid verwendet wird.

7. Verfahren nach mindestens einem der Ansprüche 1 bis 6, dadurch gekennzeichnet, daß als niedrigsiedender Alkohol Methanol, Ethanol oder Isopropanol verwendet wird.

8. Verfahren nach mindestens einem der Ansprüche 1 bis 7, dadurch gekennzeichnet, daß die Extraktion bei Drücken von etwa 20 bis etwa 65 bar, insbesondere von etwa 35 bis etwa 45 bar, durchgeführt wird.

9. Verfahren nach mindestens einem der Ansprüche 1 bis 8, dadurch gekennzeichnet, daß die Extraktion bei einer Temperatur von etwa 0 bis etwa 100°C, vorzugsweise von etwa 35 bis etwa 75°C, durchgeführt wird.

10. Verfahren nach mindestens einem der Ansprüche 1 bis 9, dadurch gekennzeichnet, daß das gereinigte Phosphatidgemisch in der Sprühvorrichtung vom Extraktionsdruck auf Umgebungsdruck entspannt wird.

11. Verfahren nach mindestens einem der Ansprüche 1 bis 9, dadurch gekennzeichnet, daß das gereinigte Phosphatidgemisch in der Sprühvorrichtung vom Extraktionsdruck auf einen bis auf etwa 0,01 bar verminderten Druck entspannt wird.

12. Verfahren nach mindestens einem der Ansprüche 1 bis 11, dadurch gekennzeichnet, daß der bei der Extraktion anfallende Extraktstrom einer Regenerierkolonne zugeführt wird, in der durch Erhöhung der Temperatur und/oder Verminderung des Druckes das Extraktionsmittel in die Dampfform überführt wird.

13. Verfahren nach Anspruch 12, dadurch gekennzeichnet, daß das dampfförmige Extraktionsmittel kondensiert und gegebenenfalls wieder verwendet wird.

## Claims

1. A process for preparing high-percentage powdery phosphatidylcholines from phosphatide mixtures having an increased content of phosphatidylcholines, characterized in that a solution in a low boiling alcohol of a phosphatide mixture having an increased content of phosphatidylcholines is extracted, by using as an extracting agent a low pressure gas which has at room temperature a reduced temperature of more than about 0.7, at pressures in the range from about 10 to about 100 bar, under such conditions that the mixture of the extracting agent and the alcohol solution of the phosphatide mixture, or phosphatidylcholines, respectively, is present in two liquid phases, and the thus-obtained purified phosphatide mixture is sprayed in a spraying apparatus under reduction of pressure.

2. The process according to claim 1, characterized in that the phosphatide mixture having an increased content of phosphatidylcholines contains more than about 60 wt%, and preferably more than about 90 wt%, of the latter.

3. The process according to at least one of the claims 1 to 2, characterized in that the extraction takes place in a countercurrent flow.

4. The process according to at least one of the claims 1 to 3, characterized in that propane and/or butane is used as the extracting agent.

5. The process according to at least one of the claims 1 to 3, characterized in that dimethyl ether mixed with propane is used as the extracting agent.

6. The process according to at least one of the claims 1 to 3, characterized in that dimethyl ether mixed with carbon dioxide is used as the extracting agent.

7. The process according to at least one of the claims 1 to 6, characterized in that methanol, ethanol or isopropanol is used as the low boiling alcohol.

8. The process according to at least one of the claims 1 to 7, characterized in that the extraction is carried out at pressures from about 20 to about 65 bar, particularly from about 35 to about 45 bar.

9. The process according to at least one of the claims 1 to 8, characterized in that the extraction is carried out at a temperature of from about 0 to about 100 °C, preferably from about 35 to about 75 °C.

10. The process according to at least one of the claims 1 to 9, characterized in that, in the spraying apparatus, the pressure of the purified phosphatide mixture is reduced from extraction pressure to ambient pressure.

11. The process according to at least one of the claims 1 to 9, characterized in that, in the spraying apparatus, the pressure of the purified phosphatide mixture is reduced from extraction pressure to a reduced pressure of about 0.01 bar.

12. The process according to at least one of the claims 1 to 11, characterized in that the extract stream occurring from the extraction is led to a regeneration column in which the extracting agent is converted into vapor by raising the temperature and or reducing the pressure.

13. The process according to claim 12, characterized in that the vaporized extracting agent is condensed and optionally re-used.

## Revendications

1. Procédé de production de phosphatidylcholines pulvérulentes de grande pureté à partir de mélanges de phosphatides ayant une teneur accrue en phosphatidylcholines, caractérisé en ce que l'on extrait une solution d'un mélange de phosphatides ayant une teneur accrue en phosphatidylcholines dans un alcool à bas point d'ébullition, moyennant l'utilisation d'un gaz à basse pression, qui possède à la température ambiante une température réduite de plus de 0,7 environ, en tant qu'agent d'extraction, à des pressions situées dans la plage d'environ 10 à environ 100 bars, dans des conditions dans lesquelles le mélange formé de l'agent d'extraction et de la solution alcoolique du mélange de phosphatides, ou des phosphatidylcholines, est présent en deux phases liquides, et le mélange de phosphatides purifié ainsi obtenu est pulvérisé sous l'effet d'une détente dans un dispositif de pulvérisation.

2. Procédé selon la revendication 1, caractérisé en ce que le mélange de phosphatides à teneur accrue en phosphatidylcholines contient plus d'environ 60 % en poids et, de préférence, plus d'environ 90 % en poids de phosphatidylcholines.

3. Procédé selon au moins l'une des revendications 1 et 2, caractérisé en ce que l'extraction s'effectue à contre-courant.

4. Procédé selon au moins l'une des revendications 1 à 3, caractérisé en ce qu'on utilise comme agent d'extraction du propane et/ou du butane.

5. Procédé selon au moins l'une des revendications 1 à 3, caractérisé en ce qu'on utilise comme agent d'extraction du diméthyléther en mélange avec du propane.

6. Procédé selon au moins l'une des revendications 1 à 3, caractérisé en ce qu'on utilise comme agent d'extraction du diméthyléther en mélange avec du gaz carbonique.

7. Procédé selon au moins l'une des revendications 1 à 6, caractérisé en ce qu'on utilise comme alcool à bas point d'ébullition du méthanol, de l'éthanol ou de l'isopropanol.

8. Procédé selon au moins l'une des revendications 1 à 7, caractérisé en ce que l'extraction est exécutée à des pressions d'environ 20 à environ 65 bars et notamment d'environ 35 à environ 45 bars.

9. Procédé selon au moins l'une des revendications 1 à 8, caractérisé en ce que l'extraction est exécutée à une température d'environ 0 à environ 100°C, de préférence d'environ 35 à environ 75°C.

10. Procédé selon au moins l'une des revendications 1 à 9, caractérisé en ce que le mélange purifié de phosphatides est détendu de la pression d'extraction à la pression ambiante, dans le dispositif de pulvérisation.

11. Procédé selon au moins l'une des revendications 1 à 9, caractérisé en ce que le mélange purifié de phosphatides est détendu de la pression d'extraction à une pression réduite jusqu'à environ 0,01 bar, dans le dispositif de pulvérisation.

12. Procédé selon au moins l'une des revendications 1 à 11, caractérisé en ce que le courant extrait, qui est obtenu lors de l'extraction, est amené à une colonne de régénération, dans laquelle l'agent d'extraction est transformé sous forme de vapeur par accroissement de la température et/ou réduction de la pression.

13. Procédé selon la revendication 12, caractérisé en ce que l'agent d'extraction sous forme de vapeur est condensé et est éventuellement réutilisé.

Figur 1